(19) Europäisches Patentamt

European Patent Office

Office européen des brevets

(11) **EP 1 533 892 B1**

(12) **EUROPÄISCHE PATENTSCHRIFT**

(45) Veröffentlichungstag und Bekanntmachung des Hinweises auf die Patenterteilung:
**26.04.2006 Patentblatt 2006/17**

(51) Int Cl.:
**H02P 6/24** (2006.01)

(21) Anmeldenummer: **03025988.1**

(22) Anmeldetag: **14.11.2003**

(54) **Verfahren zum Reduzieren der Auslaufzeit eines Elektromotors**

Method to reduce the braking time of a motor

Méthode pour réduire le temps de freinage d'un moteur

(84) Benannte Vertragsstaaten:
**AT BE BG CH CY CZ DE DK EE ES FI FR GB GR HU IE IT LI LU MC NL PT RO SE SI SK TR**

(43) Veröffentlichungstag der Anmeldung:
**25.05.2005 Patentblatt 2005/21**

(73) Patentinhaber: **ebm-papst Mulfingen GmbH & Co.KG**
**74673 Mulfingen (DE)**

(72) Erfinder:
• **Krotsch, Jens, Dipl.-Ing.(FH)**
**97996 Niederstetten (DE)**
• **Walke, Berthold, Dipl.-Ing.(FH)**
**73469 Utzmemmingen (DE)**
• **Müller, Werner, Dipl.-Ing.(FH)**
**74673 Mulfingen-Seidelklingen (DE)**

(74) Vertreter: **Patentanwälte**
**Dr. Solf & Zapf**
**Candidplatz 15**
**81543 München (DE)**

(56) Entgegenhaltungen:
**EP-A- 0 920 119**     **US-A- 5 914 582**

• **PATENT ABSTRACTS OF JAPAN vol. 1995, no. 10, 30. November 1995 (1995-11-30) & JP 07 184394 A (MITSUBA ELECTRIC MFG CO LTD), 21. Juli 1995 (1995-07-21)**
• **PATENT ABSTRACTS OF JAPAN vol. 013, no. 483 (E-839), 2. November 1989 (1989-11-02) & JP 01 190286 A (TEAC CORP), 31. Juli 1989 (1989-07-31)**

EP 1 533 892 B1

**Beschreibung**

Die vorliegende Erfindung betrifft ein Verfahren zum Reduzieren der Auslaufzeit beim Abschalten eines elektronisch kommutierten, permanentmagneterregten, dreisträngigen Elektromotors, insbesondere Ventilatormotors, wobei während des Betriebs drei Wicklungsstränge des Elektromotors über eine Kommutierungselektronik zur Erzeugung eines magnetischen Drehfeldes zum Antrieb eines Permanentmagnet-Rotors angesteuert werden.

Bei vielen Anwendungen von Elektromotoren ist es erwünscht, wenn der Motor nach dem Abschalten möglichst schnell zum Stillstand kommt, anstatt durch seine Schwungmasse noch länger auszulaufen. Dies ist besonders auch bei Ventilatoren der Fall. Aufgrund von umlaufenden, oftmals recht scharfkantigen Teilen soll ein Ventilator möglichst rasch abgebremst werden, um die Verletzungsgefahr zu reduzieren, wenn zum Beispiel bei Service-Arbeiten Abdeckungen entfernt werden müssen. Für Anwendungen mit einer langen Einschaltdauer (Dauer-Betrieb), was ebenfalls besonders für Gebläse und Ventilatoren zutrifft, werden Motoren mit hohem Wirkungsgrad und langer Lebensdauer ohne besondere Wartungsmaßnahmen benötigt. Für solche Anwendungen werden heute noch vielfach Drehstrom-Asynchronmotoren eingesetzt, und zwar in zunehmendem Maße in Verbindung mit einem Frequenzumrichter, der eine Drehzahlveränderung des Ventilators und damit eine bedarfsgerechte Einstellung der Leistung ermöglicht. Drehstrom-Asynchronmotoren haben außer ihren Lagern keine mechanischen Verschleißteile.

Besonders gut eignen sich aber bürstenlose, permanentmagneterregte Motoren durch ihren hohen Wirkungsgrad als Antriebe für Ventilatoren. Ihre bürstenlose Ausführung mit elektronischer Kommutierung gewährleistet eine hohe Lebensdauer ohne besondere Wartungsmaßnahmen. Die für den Betrieb notwendige, in vielen Fällen bereits im Motor integrierte Kommutierungsetektronik erlaubt eine kostengünstige Drehzahlstellung. Üblicherweise werden dreisträngige Motoren verwendet, die ein gleichförmiges Drehmoment erzeugen und dadurch sehr ruhig laufen. Bei modemen Ventilatoren bis zu einigen Kilowatt Leistung werden bürstenlose permanentmagneterregte Motoren, die auch als elektronisch kommutierte (EC-) Motoren bezeichnet werden, erfolgreich eingesetzt.

Zum Abbremsen von Elektromotoren sind bestimmte Maßnahmen bekannt.

Bei Drehstrom-Asynchronmotoren wird zur Abbremsung anstatt von im Betrieb drei um 120° versetzten Sinus-Spannungen eine Gleichspannung an die Motorklemmen angelegt oder ein Gleichstrom in den Motorwicklungen eingeprägt. Das dadurch entstehende Gleichfeld induziert Ströme in der rotierenden Rotorwicklung (Kurzschlußstäbe), die ein von der Motordrehzahl abhängiges Bremsmoment bewirken. Diese sogenannte Gleichstrombremsung ist eine bei Drehstrom-Asynchronmotoren übliche Methode. Die kinetische Energie wird beim Bremsen in erster Linie im Rotor in Wärme umgesetzt. Für permanentmagneterregte Motoren ist diese Vorgehensweise jedoch nicht geeignet, da ein zeitlich und räumlich feststehendes magnetisches Statorfeld bei drehendem Motor nur Pendelmomente, aber im Mittel kein bremsendes Moment erzeugen würde.

Bei permanentmagneterregten Maschinen ist ein Betrieb des Motors im zweiten oder vierten Quadranten, d. h. als Generator, bekannt. Der Energiefluß erfolgt hierbei vom Motor in die Kommutierungselektronik. Deshalb ist bei solchen Anwendungen je nach Leistungsbereich entweder ein gesteuerter Gleichrichter in der Elektronik erforderlich, der eine Rückspeisung der Energie in das Versorgungsnetz ermöglicht, oder aber ein Bremswiderstand mit "Brems-Chopper" im Zwischenkreis, in dem die Bremsenergie in Wärme umgesetzt wird. Da Ventilatorantriebe in ihrem eigentlichen Betrieb stets motorisch wirken, sind solche Maßnahmen üblicherweise nicht vorhanden. Die bekannten Verfahren zum Abbremsen wären daher mit erheblichen Zusatzkosten verbunden.

Aus der EP 0 831 580 B1 ist es bekannt, einen elektronisch kommutierten Permanentmagnet-Motor durch ein spezielles Ansteuerungsverfahren im generatorischen Betrieb, jedoch mit schlechtem Wirkungsgrand, d. h. nicht unter Aufrechterhaltung der Feldorientierung, zu betreiben. Dadurch kann auf die oben erläuterten Maßnahmen zur Rückspeisung oder Umwandlung der Bremsenergie verzichtet werden. Ein Betrieb mit schlechtem Wirkungsgrad bedeutet jedoch einen Ventilatorantrieben - im Gegensatz zu Servomotoren - gesinterte oder kunststoffgebundene Ferrit-Magnete eingesetzt, die diesbezüglich verhältnismäßig empfindlich sind. Der Erfindung liegt nun die Erkenntnis zugrunde, dass hauptsächlich der Stoßkurzschlussstrom kritisch für Entmagnetisierungserscheinungen bei hohen Drehzahlen ist. Der stationäre Dauerkurzschlussstrom schädigt die Permanentmagnete hingegen nicht und ist überraschenderweise weitgehend unabhängig von der Motordrehzahl. Diese Aussage gilt für einen weiten Bereich unterschiedlicher Motorausführungen mit verschiedenen Wicklungsauslegungen, Polzahlen, Statorpaketlängen und/oder Luftspaltdurchmessern gleichermaßen.

Durch die erfindungsgemäße Maßnahme des anfänglich nur zweipoligen Kurzschlusses mit unmittelbar darauffolgendem Übergang auf einen dreipoligen Kurzschluss der Motorwicklungen treten keine Stromüberhöhungen bezüglich des Dauerkurzschlussstromes auf. Dadurch kann nahezu bei einer beliebig hohen Drehzahl gebremst werden, ohne die Permanentmagnete zu gefährden. Femer wird durch den unmittelbaren Übergang auf einen dreipoligen Kurzschluss ein gleichförmiges Bremsmoment erzeugt, das ein gleichmäßiges geräuscharmes Abbremsen des Motors ermöglicht. Zur Durchführung ist kein Mehraufwand erforderlich. Das Verfahren läßt sich mit der üblichen, für die normale Kommutierung ohnehin erforderlichen und für den Betrieb im ersten oder dritten Quadranten ausgelegten Kommutierungselektronik realisieren, indem lediglich eine Steuereinheit entsprechend ausgelegt (programmiert) zu werden braucht.

Weitere bevorzugte Maßnahmen sind in den Unteransprüchen und der folgenden Beschreibung enthalten.

Anhand der beiliegenden Zeichnung soll die Erfindung beispielhaft genauer erläutert werden. Dabei zeigen:

Fig. 1 ein schematisches Schaltbild eines permanentmagneterregten, dreisträngigen Motors mit Kommutierungselektronik,

Fig. 2 ein Diagramm zur Darstellung von Spannungs- und Stromverläufen über dem Drehwinkel bei einem nicht erfindungsgemäßen, ausschließlich dreipoligen Kurzschluss und

großen Blindstromanteil zwischen Motor und Umrichter (Kommutierungselektronik). Bei hohen Bremsmomenten entsteht daher eine große Strombelastung und aufgrund der notwendigen PWM-Taktung von Leistungsschaftem der Kommutierungselektronik eine große thermische Belastung des Wechselrichters, was eine entsprechend große Dimensionierung (Überdimensionierung) und damit Zusatzkosten erforderlich macht. Ohne Mehrkosten könnten daher nur kleine Bremsmomente erzeugt werden, die nicht zur geforderten Reduzierung der Auslaufzeit insbesondere von Ventilatoren führen würden.

Zum Bremsen von permanentmagneterregten Motoren ist es femer bekannt, die drei Motorwicklungsanschlüsse kurzzuschließen. Dadurch wird durch das sich zeitlich ändernde permanentmagnetische Rotorfeld in den kurzgeschlossenen Wicklungen ein Strom induziert, der ein bremsendes Motordrehmoment hervorruft. Es entstehen dabei aber hohe, von der Motordrehzahl abhängige Ströme. Unmittelbar nach dem Kurzschluss tritt ein transienter, sogenannter Stoßkurzschtussstrom auf, der von seiner Amplitude her deutlich über einem sich später einstellenden stationären Dauerkurzschlussstrom liegt.

Dieser Stoßkurzschlussstrom könnte in bekannter Weise durch einen nur zweipoligen Kurzschluss vermieden werden, jedoch tritt hierbei ein stark über den Drehwinkel pendeindes Bremsmoment auf. Dies kann zu ausgeprägten akustischen Geräuschen führen. Das Dokument US 5914582 beschreibt eine Motorsteuerung für eine Synchnonmaschine mit einem zweipoligen Kurzschluss und einem anschließenden dreipoligen Kurzschluss. Das Dokument JP 07184394 beschreibt auch eine Steuereinheit zur Regelung eines Motorbremsmoments, die über Schaltelemente die Motorwicklungen selektiv kurzschließt.

Der vorliegenden Erfindung liegt die Aufgabe zugrunde, ein Verfahren zum Abbremsen eines permanentmagneterregten Motors anzugeben, das eine schnelle und gleichmäßige Abbremsung ohne Zusatzkosten und ohne zunehmende akustische Geräusche ermöglicht.

Erfindungsgemäß wird dies gemäß dem Anspruch 1 dadurch erreicht, dass zum Abschalten zunächst kurzzeitig nur zwei der drei Wicklungsanschlüsse Kurzgeschlassen werden, wobei der dritte der Wicklungsanschlüsse offen betrieben wird und kurz darauffolgend alle drei Wicklungsanschlüsse kurzgeschlossen werden. Erfindungsgemäß wird somit anfänglich ein zweipoliger Kurzschluss durchgeführt und unmittelbar darauffolgend auf einen dreipoligen Kurzschluss der Motor-Wicklungsstränge übergegangen. Dadurch können vorteilhafterweise hohe Ströme vermieden werden, die zu einer Entmagnetisierung der Permanentmagnete des Rotors führen könnten. Üblicherweise werden heute aus Kostengründen besonders bei

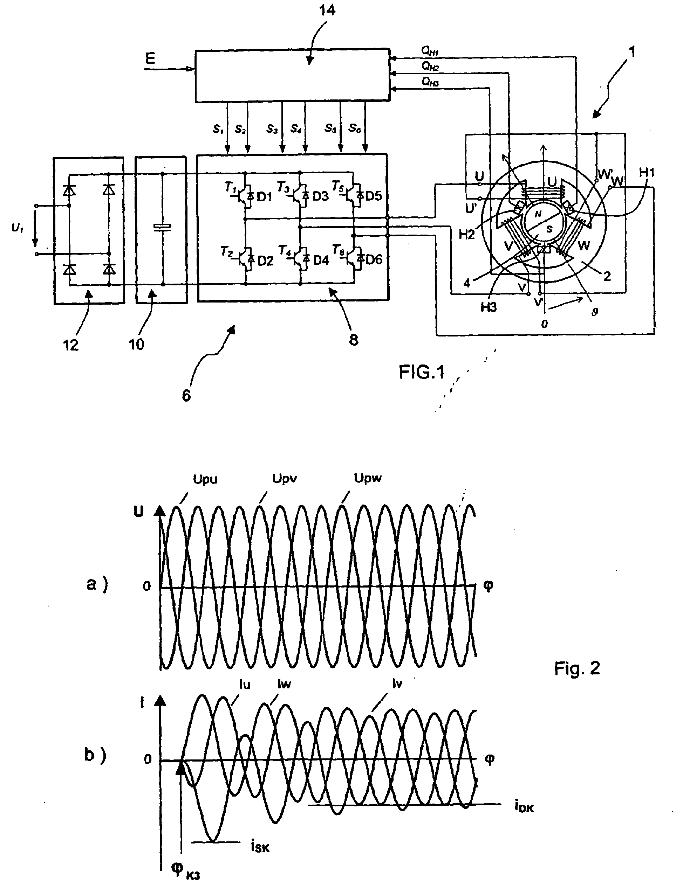

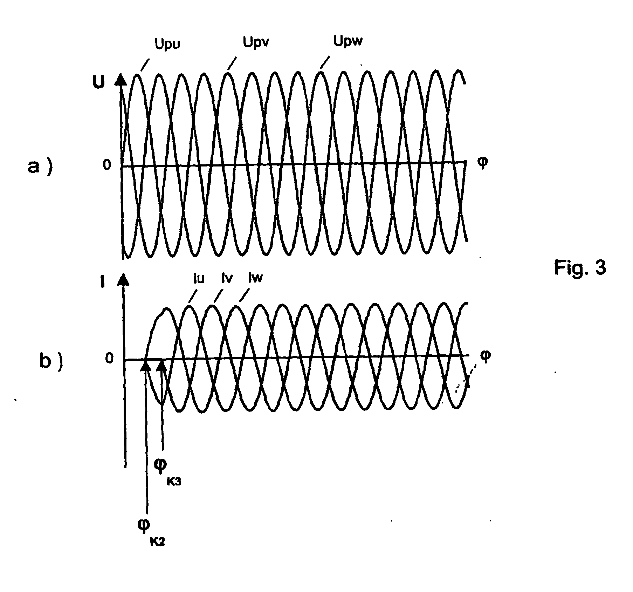

Fig. 3 ein gleichartiges Diagramm zur Erläuterung der Vorgänge bei Anwendung des erfindungsgemäßen Verfahrens.

In Fig. 1 ist schematisch ein elektronisch kommutierter, permanentmagneterregter Elektromotor (EC-Motor) 1 veranschaulicht, der einen Stator 2 mit drei Wicklungssträngen u, v, w und einen permanentmagnetischen Rotor 4 aufweist. Im dargestellten Beispiel sind die Wicklungsstränge u, v, w in Stemschaltung angeordnet, wobei jeweils zweite Wicktungsanschlüsse U',V',W' einen gemeinsamen Stempunkt bilden. Die ersten Wicklungsanschlüsse U, V, W werden in an sich bekannter Weise von einer Kommutierungselektronik 6 zum Erzeugen eines den Rotor 4 antreibenden magnetischen Drehfeldes in Abhängigkeit von der jeweiligen Drehstellung des Rotors 4 angesteuert, um so ein Antriebsmoment zu erzeugen.

Die Kommutierungselektronik 6 besteht aus einem Wechselrichter 8 mit sechs in Brückenschaltung geschalteten elektronischen Schaltelementen (Leistungshalbleitem) T1 bis T6. Dabei sind in an sich bekannter Weise die Schaltelemente T1 bis T6 paarweise in Reihenschaltung in drei zueinander parallelen Brückenzweige angeordnet und weisen jeweils eine parallele Freilaufdiode D1 bis D6 auf. In einem ersten Brückenzweig sind ein erstes Schaltelement T1 und ein zweites Schaltelement T2, in einem zweiten Brückenzweig ein drittes und viertes Schaltelement T3, T4 sowie in einem dritten Brückenzweig ein fünftes und sechstes Schaltelement T5, T6 angeordnet. Die Wicklungsanschlüsse U, V, W sind an den einzelnen Brückenzweigen jeweils zwischen den beiden Schaltelementen angeschlossen. Der Wechselrichter 8 wird aus einem Gleichspannungs-Zwischenkreis 10 gespeist, wobei eine Gleichspannung für den Zwischenkreis 10 durch einen ungesteuerten Brückengleichrichter 12 aus einer Eingangswechselspannung U1 erzeugt werden kann. Zur Erfassung der Rotor-Drehstellung sind drei Hall-Sensoren H1, H2, H3 im Motor 1 plaziert, deren - insbesondere digitalen - Ausgangssignale $Q_{H1}$ $Q_{H2}$, $Q_{H3}$ einer Steuereinheit 14 zugeführt werden. Diese Steuereinheit 14, die mit Vorteil aus einem Mikrocontroller besteht, ermittelt hieraus den augenblicklichen Drehwinkel des Rotors 4 und erzeugt in Abhängigkeit von der Rotor-Drehstellung Steuersignale S1 bis S6 zur Ansteuerung der Schaltelemente T1 bis T6 des Wechselrichters 8.

Für die Erfindung ist es wesentlich, dass die Wicklungsstränge u, v, w des Motors 1 mit der an sich bekannten Kommutierungselektronik 6 durch gleichzeitiges Einschalten von jeweils mindestens zwei der "oberen" Schaltelemente T1, T3, T5 oder der "unteren" Schaltelemente T2, T4, T6 kurzgeschlossen werden können. Dazu braucht lediglich die Steuereinheit 14 für eine neuartige Brems-Ansteuerung ausgelegt (programmiert) zu sein.

Zur Erläuterung zeigt Fig. 2 die Verläufe von Spannungen (Fig. 2a) und Strömen (Fig. 2b) über den Drehwinkel φ des Rotors 4, wenn in einer nicht erfindungsgemäßen Weise ein nur dreipoliger Kurzschluss durch gleichzeitiges Schließen aller drei unteren oder oberen Schaltelemente T1, T3, T5 bzw. T2, T4, T6 durchgeführt wird. Direkt nach diesem Kurzschluss tritt ein hoher transienter Stoßkurzschlussstrom $i_{SK}$ auf, wobei der Strom nachfolgend in einen Dauerkurzschlussstrom $i_{DK}$ übergeht. Der Stoßkurzschlussstrom würde zur Entmagnetisierung der Permanentmagnete im Rotor 4 führen.

Erfindungsgemäß wird deshalb zur Vermeidung unzulässig hoher Ströme zunächst anfänglich ein nur zweipoliger Kurzschluss durch Einschalten von nur zwei der drei oberen oder unteren Schaltelemente durchgeführt und unmittelbar darauffolgend auf einen dreipoligen Kurzschluss der Motor-Wicklungsstränge durch Einschalten aller drei oberen oder unteren Schaltelemente übergegangen.

Im Wechselrichter 8 der Kommutierungselektronik 6 müssen aufgrund der Wicklungsinduktivitäten zu den Schaltelementen T1 bis T6 die parallel geschalteten Freilaufdioden D1 bis D6 vorhanden sein, die den nach einem Abschalten der Schaltelemente induktionsbedingt noch weiter vorhandenen Strom übernehmen. Werden nun jeweils zwei Schaltelemente für einen zweipoligen Kurzschluss geschlossen, so kann je nach augenblicklicher Polarität der induzierten Spannung am dritten Wicklungsanschluss die zugehörige Diode leitend werden. Der zweipolige Kurzschluss sollte daher bei dieser Anordnung nur innerhalb bestimmter Zeit- bzw. Drehwinkelbereiche erfolgen. In Folge der Freilaufdioden könnte es sonst auch beim zweipoligen Kurzschluss zu einem Anstieg des Stromes über den Dauerkurzschlussstrom kommen, selbst wenn der anfänglich Stoßkurzschlussstrom vermieden wird.

Deshalb wird in bevorzugter Ausgestaltung der Erfindung der zweipolige Kurzschluss - im Falle der Erzeugung dieses Kurzschlusses über zwei der unteren Schalter (T2, T4, T6) - stets in einem Drehwinkelbereich durchgeführt, in dem die Spannung am dritten, noch offenen Wicklungsanschluss positiver als der Minus-Anschluss des Zwischenkreises 10 ist, und der Übergang zum dreipoligen Kurzschluss erfolgt, bevor die Spannung negativ wird. Der Drehwinkel für den zweipoligen Kurzschluss $φ_{K2}$ und der Winkel für den dreipoligen Kurzschluss $φ_{K3}$ (vergleiche dazu Fig. 3) werden hierbei so festgelegt, dass transiente Ströme mit hoher Amplitude vermieden werden.

Erfolgt der Kurzschluss der Wicklungsstränge über die oberen Schalter (T1, T3, T5), gilt Beschriebenes sinngemäß, jedoch wird der zweipolige Kurzschluss stets in einem Drehwinkelbereich durchgeführt, in dem die Spannung am dritten, noch offenen Wicklungsanschluß negativer als der Plus-Anschluss des Zwischenkreises 10 ist, so dass die obere Freilaufdiode nicht in den leitenden Zustand gelangt.

Wird beispielhaft von einem Motor 1 mit einem Wicklungsstrangwiderstand R und einer Wicklungsstranginduktivität L ausgegangen, dessen Wicklungsstränge bezüglich der Drehrichtung so angeordnet sind, dass drei um jeweils 120°el versetzte induzierte Strangspannungen Upu, Upv, Upw entstehen und der Drehwinkel φ so definiert ist, dass er beim Übergang von Upu vom negativen zum positiven Bereich Null ist, dann kann beim zweipoligen Kurzschluss der Kurschlusswinkel $φ_{K2}$ in Abhängigkeit der elektrischen Drehfrequenz w mit Vorteil gemäß

$$φ_{K2} = \arctan \frac{L}{R} ω + φ_0$$

vorgegeben werden, wobei der Versatzwinkel $φ_0$ in Abhängigkeit von den beim zweipoligen Kurzschluss kurzgeschlossenen Wicklungsanschlüssen und den hierfür eingeschalteten Schaltelementen nach Tabelle 1 gewählt werden kann.

Der dreipolige Kurzschluss kann beim Kurzschlusswinkel $φ_{K3}$ gemäß

$$φ_{K3} = φ_{K2} + 90°el$$

mit Vorteil um einen Drehwinkel von etwa 90°el nach dem zweipoligen Kurzschluss erfolgen, wobei dieser Drehwinkel aber auch im Bereich von 80°el bis 100°el liegen kann.

Tabelle 1: Vorteilhafte Kurzschlusswinkel zur Vermeidung von Stromüberhöhungen

| Zweipoliger Kurzschluss | | | Dreipoliger Kurzschluss |
|---|---|---|---|
| Kurzgeschlossene Wicklungsanschlüsse | Leitende Schaltelemente | Versatzwinkel $\varphi_o$ | Leitende Schaltelemente |
| U und V | T2 und T4<br>T1 und T3 | 150° el<br>330°el | T2, T4 und T6<br>T1, T3 und T5 |
| V und W | T4 und T6<br>T3 und T5 | 270°el<br>90°el | T2, T4 und T6<br>T1, T3 und T5 |
| U und W | T2 und T6<br>T1 und T5 | 30°el<br>210°el | T2, T4 und T6<br>T1, T3 und T5 |

Die optimalen Werte zur Vermeidung einer transienten Stromüberhöhung können auch empirisch ermittelt werden, wenn die Motor-Parameter R und L nicht genau bekannt sind oder wenn motorabhängig zusätzliche Einflüsse, wie z. B. Sättigung des Eisens oder Ankerrückwirkung, berücksichtigt werden müssen. Die angegebenen Berechnungsformen sind daher lediglich als Beispiele zu verstehen.

In Fig. 3 ist nun beispielhaft der Wicklungsstromverlauf für den gleichen Motor entsprechend Fig. 2 mit R=1,6 Ohm und L= 40 mH bei der gleichen Drehfrequenz von $\omega$ = 335 rad/s nach dem erfindungsgemäßen Verfahren dargestellt. Der zweipolige Kurzschluss erfolgt hier beispielhaft durch Einschalten der Schaltelemente T2 und T6, d. h. durch Kurzschließen der Wicktungsstränge U und W bei $\varphi_{K2}$=114°el, und der Übergang zum dreipoligen Kurzschluss erfolgt bei $\varphi_{K3}$=204°el. Es ist deutlich zu erkennen, dass kein Stromanstieg über den stationären Dauerkurzschlussstrom $i_{DK}$ hinaus auftritt.

Das erfindungsgemäße Verfahren kann mit der Steuereinheit 14 beispielsweise durch einfache Erweiterung der Software eines bereits für die Kommutierung üblicherweise vorhandenen Mikrocontrollers ohne Zusatzkosten realisiert werden. Der Mikrocontroller kann anhand der Rotor-Drehstellungssignale $Q_{H1}$, $Q_{H2}$, $Q_{H3}$ den augenblicklichen Drehwinkel $\varphi$ und die augenblickliche Drehfrequenz $\omega$ ermitteln. Im Mikrocontroller sind die vorbestimmten Kurzschluss-winkel $\varphi_{K2}$ und $\varphi_{K3}$ und die zugehörige KurzschlussDrehfrequenz $\omega_K$ hinterlegt. Wird z. B. über einen Stellsignaleingang E der Elektronik ein Motor-Stopp-Befehl gegeben, dann unterbricht der Mikrocontroller die Wicklungströme und vergleicht die momentane Drehfrequenz $\omega$ mit der hinterlegten zugehörigen Kurzschlussdrehfrequenz $\omega_K$. Sinkt die Drehzahl unter den vorgegebenen Wert, dann wird der augenblickliche Drehwinkel $\varphi$ mit den hinterlegten Kurzschlusswinkeln $\varphi_{K2}$ und $\varphi_{K3}$ verglichen, und bei Überschreitung bzw. Erreichen werden die entsprechenden Schaltelemente zum Kurzschluss der Wicklungen statisch eingeschaltet.

In einer vorteilhaften Ausführungsvariante der Erfindung können anstatt der Kurzschlusswinkel $\varphi_{K2}$ und $\varphi_{K3}$ und der zugehörigen Kurzschlussdrehfrequenz $\omega_K$ die Motordaten L und R im Mikrocontroller hinterlegt sein. Nach dem Erteilen eines Stopp-Befehls über den Stellsignaleingang E wird wiederum die Bestromung des Motors 1 unterbrochen, und es werden unmittelbar entsprechend der augenblicklichen Drehfrequenz $\omega$ und des augenblicklichen Drehwinkels $\varphi$ nach obiger Tabelle die nächst liegenden Kurzschlusswinkel $\varphi_{K2}$ und $\varphi_{K3}$ berechnet. Bei Überschreitung bzw. Erreichen der Winkel werden die zugeordneten Schaltelemente geschlossen. Dadurch kann bei jeder Motordrehzahl ein schnellstmögliches Stoppen des Motors erreicht werden.

Durch die Erfindung können wichtige Vorteile erreicht werden. Das erfindungsgemäße Verfahren ermöglicht eine Bremsung nahezu bei einer beliebig hohen Drehzahl, ohne dabei die Permanentmagnete des Rotors zu gefährden. Ferner wird durch den unmittelbaren Übergang vom zweipoligen auf einen dreipoligen Kurzschluss ein sehr gleichförmiges Bremsmoment erzeugt, das ein gleichmäßiges und geräuscharmes Abbremsen des Motors ermöglicht. Zur Durchführung des Verfahrens ist kein Mehraufwand (Hardware) erforderlich. Das Verfahren läßt sich vielmehr mit der für die normale Kommutierung erforderlichen, für den Betrieb im ersten oder dritten Quadranten ausgelegten Kommutierungselektronik realisieren. Die Schaltelemente des Wechselrichters müssen nicht getaktet werden, sondern sind zum Kurzschluss statisch eingeschaltet, so dass die auftretenden Kurzschlussströme nicht zu einer gegenüber dem normalen Betrieb bei Nennlast zunehmenden Erwärmung führen. Es ist dadurch keine besondere Dimensionierung (Überdimensionierung) erforderlich.

Die Erfindung ist nicht auf das dargestellte und beschriebene Beispiel beschränkt. So kann für die Steuereinheit 14 anstatt eines Mikrocontrollers ebenso ein anderer programmierbarer Baustein, zum Beispiel CPLD oder FGPA, oder eine konventionelle analoge oder digitale Schaltung verwendet werden. Ebenso ist die Erfindung nicht auf das beschriebene zweipolige Beispiel einer Motor-Stemschaltung beschränkt, sondern ist gleichermaßen auch für Motoren in Dreieckschaltung oder für Motoren mit höheren Polzahlen geeignet.

**Patentansprüche**

1. Verfahren zum Reduzieren der Auslaufzeit beim Abschalten eines elektronisch kommutierten, permanentmagneterregten dreisträngigen Elektromotors (1), wobei während des Betriebs drei Wicklungsstränge (u,v;w) des Elektromotors (1) über drei Wicklungsanschlüsse (U,V,W) von einer Kommutierungselektronik (6) zur Erzeugung eines magnetischen Drehfeldes angesteuert werden, **dadurch gekennzeichnet, dass** zum Abbremsen des Motors zunächst kurzzeitig zwei der drei Wicklungsanschlüsse (U,V,W) kurzgeschlossen werden, wobei der dritte der Wicklungsanschlüsse (U, V, W) offen betrieben wird und kurz darauffolgend alle drei Wicklungsanschlüsse (U,V,W) kurzgeschlossen werden.

2. Verfahren nach Anspruch 1,
   **dadurch gekennzeichnet, dass** die Wicklungsstränge (u,v,w) über einen gesteuerten Wechselrichter (8) mit sechs in Brückenschaltung, und zwar paarweise in Reihe in drei zueinander parallelen Brückenzweigen geschalteten, elektronischen Schaltelementen (T1 bis T6) angesteuert werden, wobei die Wicklungsanschlüsse (U,V,W) durch gleichzeitiges Einschalten von mindestens zwei Schaltelementen kurzschließbar sind.

3. Verfahren nach Anspruch 2,
   **dadurch gekennzeichnet, dass** für den zweipoligen Kurzschluss jeweils zwei auf der gleichen Brückenseite in verschiedenen Brückenzweigen angeordnete, d. h. obere oder untere Schaltelemente (T1 und T3 oder T3 und T5 oder T1 und T5 oder T2 und T4 oder T4 und T6 oder T2 und T6) gleichzeitig eingeschaltet werden.

4. Verfahren nach Anspruch 2 oder 3,
   **dadurch gekennzeichnet, dass** für den dreipoligen Kurzschluss jeweils alle drei auf der gleichen Brückenseite in verschiedenen Brückenzweigen angeordnete, d. h. obere oder untere Schaltelemente (T1, T3 und T5 oder T2, T4 und T6) gleichzeitig eingeschaltet werden.

5. Verfahren nach einem der Ansprüche 2 bis 4,
   **dadurch gekennzeichnet, dass** die Schaltelemente (T1-T6) der Kommutierungselektronik (6) sowohl im Betrieb als auch zum Abschalten und Kurzschließen der Wicklungsanschlüsse (U,V,W) von einer Steuereinheit (14) angesteuert werden.

6. Verfahren nach einem der Ansprüche 1 bis 5,
   **dadurch gekennzeichnet, dass** mittels der Steuereinheit (14) der zweipolige Kurzschluss bei einem ersten Drehwinkel ($\varphi_{K2}$) und anschließend der dreipolige Kurzschluss bei einem zweiten Drehwinkel ($\varphi_{K3}$) veranlasst werden, wobei diese Drehwinkel ($\varphi_{K2}$, $\varphi_{K3}$) derart vorgegeben werden, dass kurzschlussbedingt auftretende Ströme hinsichtlich ihrer Amplitude jedenfalls kleiner als ein bei nur dreipoligem Kurzschluss auftretender Stoßkurzschlussstrom ($i_{SK}$) sind und insbesondere transiente Stromanteile, die zu einer gegenüber einem Dauerkurzschlussstrom ($i_{DK}$) höheren Strom-Amplitude führen, vermieden werden.

7. Verfahren nach Anspruch 6,
   **dadurch gekennzeichnet, dass** die Drehwinkel ($\varphi_{K2}$, $\varphi_{K3}$) für den zwei- und dreipoligen Kurzschluss derart vorgegeben werden, dass von den Schaltelementen (T1 - T6) jeweils parallel geschalteten Freilaufdioden (D1 - D6) diejenigen zwei Freiaufdioden (D1 und D2 oder D3 und D4 oder D5 und D6), die während des zweipoligen Kurzschlusses mit dem jeweils nicht kurzgeschlossenen Wicklungsanschluss verbunden sind, stromlos sind.

8. Verfahren nach Anspruch 6 oder 7,
   **dadurch gekennzeichnet, dass** der dreipolige Kurzschluss um einen Drehwinkel etwa im Bereich von 80°el bis 100°el versetzt, insbesondere etwa 90°el, nach dem zweipoligen Kurzschluss erfolgt.

9. Verfahren nach einem der Ansprüche 6 bis 8,
   **dadurch gekennzeichnet, dass** der Drehwinkel ($\varphi_{K2}$) für den zweipoligen Kurzschluss in Abhängigkeit von der Wicklungsinduktivität (L), dem Wicklungswiderstand (R), der Drehfrequenz ($\omega$) des Motors einem konstanten Versatzwinkel ($\varphi_o$) gemäß der Beziehung $\varphi_{K2} = \arctan \dfrac{L}{R} \cdot \omega + \varphi_o$ festgelegt wird.

10. Elektromotor (1) mit einem Stator (2) mit drei Wicklungssträngen (u, v, w) und einem permanentmagnetischen Rotor (4) sowie mit einer Kommutierungselektronik (6), bestehend aus einem gesteuerten Wechselrichter (8) mit sechs in Brückenschaltung geschalteten und mit Steuersignalen (S1-S6) versehenen elektronischen Schaltelementen (T1-T6) zum Ansteuern der Wicklungssträngen (u, v, w) zwecks Erzeugung eines magnetischen Drehfeldes zum Antrieb des Rotors (4),

**gekennzeichnet durch** eine Auslegung der Kommutierungselektronik (6) derart, dass zum Abbremsen des Rotors (4) unter Anwendung des Verfahrens nach einem der vorhergehenden Ansprüche den Schaltelementen (T1-T6) des Wechselrichters (8) die Steuersignale (S1-S6) zugeführt werden.

## Revendications

1. Procédé de réduction de la période de fonctionnement par inertie lors de la mise hors circuit d'un moteur électrique (1) à trois lignes excité par un aimant permanent, à commutation électronique, dans lequel pendant le fonctionnement, trois lignes de bobinage (u, v, w) du moteur électrique (1) sont commandées par un dispositif électronique de commutation (6) par le biais de trois connexions de bobinage (U, V, W) aux fins de la production d'un champ magnétique tournant, **caractérisé en ce que**, aux fins du freinage du moteur, deux des trois connexions de bobinage (U, V, W) sont d'abord mises en court-circuit pendant un bref moment, la troisième des connexions de bobinage (U, V, W) étant maintenue en fonctionnement ouvert, et les trois connexions de bobinage (U, V, W) étant mises en court-circuit peu de temps après.

2. Procédé selon la revendication 1, **caractérisé en ce que** les lignes de bobinage (u, v, w) sont commandées par le biais d'un onduleur commandé (8) avec six éléments de commutation électroniques (T1 à T6) montés en pont, et ce par paires en série de trois branches de ponts parallèles l'une à l'autre, les connexions de bobinage (U, V, W) pouvant être mises en court-circuit au moyen de la mise en circuit simultanée d'au moins deux éléments de commutation.

3. Procédé selon la revendication 2, **caractérisé en ce que**, pour le court-circuit bipolaire, deux éléments de commutation agencés sur le même côté du pont dans des branches différentes du pont, autrement dit des éléments supérieurs ou inférieurs (T1 et T3 ou T3 et T5 ou T1 et T5 ou T2 et T4 ou T4 et T6 ou T2 et T6), sont à chaque fois mis en circuit simultanément.

4. Procédé selon l'une quelconque des revendications 2 ou 3, **caractérisé en ce que**, pour le court-circuit tripolaire, les trois éléments de circuit agencés sur le même côté du pont dans des branches différentes du pont, autrement dit les éléments de commutation supérieurs ou inférieurs (T1, T3 et T5 ou T2, T4 et T6), sont à chaque fois mis en circuit simultanément.

5. Procédé selon l'une quelconque des revendications 2 à 4, **caractérisé en ce que** les éléments de commutation (T1 à T6) du dispositif électronique de commutation (6) sont commandés par une unité de commande (14) aussi bien pendant le fonctionnement que pour la mise hors circuit et la mise en court-circuit des connexions de bobinage (U, V, W).

6. Procédé selon l'une quelconque des revendications 1 à 5, **caractérisé en ce que**, au moyen de l'unité de commande (14), le court-circuit bipolaire est engendré à un premier écart angulaire ($\varphi_{K2}$), puis le court-circuit tripolaire à un deuxième écart angulaire ($\varphi_{K3}$), lesdits écarts angulaires ($\varphi_{K2}$, $\varphi_{K3}$) étant déterminés de telle sorte que les courants créés en raison du court-circuit sont à chaque fois plus faibles au niveau de leur amplitude qu'un courant maximal asymétrique de court-circuit ($i_{SK}$) créé lors d'un court-circuit uniquement tripolaire et, en particulier, les composantes de courant transitoire qui entraînent une amplitude de courant plus élevée par rapport à un courant de court-circuit permanent ($i_{DK}$) sont évitées.

7. Procédé selon la revendication 6, **caractérisé en ce que** les écarts angulaires ($\varphi_{K2}$, $\varphi_{K3}$) pour le court-circuit bipolaire et tripolaire sont déterminés de telle sorte que, parmi les diodes de roue libre (D1 à D6) montées respectivement en parallèle des éléments de commutation (T1 à T6), les deux diodes de roue libre (D1 et D2 ou D3 et D4 ou D5 et D6) qui sont reliées pendant le court-circuit bipolaire à la connexion de bobinage respective non court-circuitée sont sans courant.

8. Procédé selon l'une quelconque des revendications 6 ou 7, **caractérisé en ce que** le court-circuit tripolaire a lieu autour d'un écart angulaire situé sensiblement dans une marge de 80°el à 100°el de décalage, en particulier à sensiblement 90°el, après le court-circuit bipolaire.

9. Procédé selon l'une quelconque des revendications 6 à 8, **caractérisé en ce que** l'écart angulaire ($\varphi_{K2}$) pour le court-circuit bipolaire est déterminé en fonction de l'inductance de bobinage (L), de la résistance de bobinage (R), de la fréquence de rotation ($\omega$) du moteur et d'un angle de décalage constant ($\varphi_o$) selon la relation

$$\varphi_{K2} = \arctan\frac{L}{R}\omega + \varphi_o.$$

10. Moteur électrique (1) ayant un stator (2) avec trois lignes de bobinage (u, v, w) et un rotor à aimant permanent (4), ayant également un dispositif électronique de commutation (6) constitué d'un onduleur commandé (8) avec six éléments de commutation électroniques (T1 à T6) munis de signaux de commande (S1 à S6) et montés en pont aux fins de la commande des lignes de bobinage (u, v, w) pour la production d'un champ magnétique tournant destiné à l'entraînement du rotor (4),
    **caractérisé en ce que** le dispositif électronique de commutation (6) est conçu de telle sorte que, aux fins du freinage du rotor (4) par l'application du procédé selon l'une quelconque des revendications précédentes, les signaux de commande (S1 à S6) sont transmis aux éléments de commutation (T1 à T6) de l'onduleur (8).

**Claims**

1. Method for reducing the run-down time on switching off an electronically commutated, permanent-magnet-excited three-phase electric motor (1), with three winding phases (u, v, w) of the electric motor (1) being controlled via three winding connections (U, V, W) of commutating electronics (6) to generate a magnetic rotary field during operation, **characterised in that** to brake the motor firstly two of the three winding connections (U, V, W) are briefly short-circuited while the third of the winding connections (U, V, W) is operated in the open state, and shortly after that all three winding connections (U, V, W) are short-circuited.

2. Method according to Claim 1,
    **characterised in that** the winding phases (u, v, w) are controlled via a controlled inverter (8) having six electronic switching elements (T1 to T6) connected in a bridge circuit, to be precise in a manner paired in series in three mutually parallel bridge branches, it being possible for the winding connections (U, V, W) to be short-circuited by switching on at least two switching elements simultaneously.

3. Method according to Claim 2,
    **characterised in that** for the two-pole short circuit in each case two switching elements arranged on the same bridge side in different bridge branches, i.e. upper or lower switching elements (T1 and T3 or T3 and T5 or T1 and T5 or T2 and T4 or T4 and T6 or T2 and T6), are switched on simultaneously.

4. Method according to Claim 2 or 3,
    **characterised in that** for the three-pole short circuit in each case all three switching elements arranged on the same bridge side in different bridge branches, i.e. upper or lower switching elements (T1, T3 and T5 or T2, T4 and T6) are switched on simultaneously.

5. Method according to one of Claims 2 to 4,
    **characterised in that** the switching elements (T1-T6) of the commutating electronics (6) are controlled by a control unit (14), both during operation and for switching off and short-circuiting the winding connections (U, V, W).

6. Method according to one of Claims 1 to 5,
    **characterised in that** by means of the control unit (14) the two-pole short circuit is brought about at a first angle of rotation ($\varphi_{k2}$) and subsequently the three-pole short circuit is brought about at a second angle of rotation ($\varphi_{k3}$), these angles of rotation ($\varphi_{k2}$, $\varphi_{k3}$) being preset in such a way that currents occurring as a result of a short circuit are always smaller, in respect of their amplitude, than a sudden short-circuit current ($i_{SK}$) occurring during only a three-pole short circuit, and in particular transient current components, which lead to a higher current amplitude compared with a sustained short-circuit current ($i_{DK}$), are avoided.

7. Method according to Claim 6,
    **characterised in that** the angles of rotation ($\varphi_{k2}$, $\varphi_{k3}$) for the two- and three-pole short circuit are preset in such a way that, of the freewheeling diodes (D1 - D6) connected in each case in parallel with switching elements (T1 - T6),

# EP 1 533 892 B1

those two freewheeling diodes (D1 and D2 or D3 and D4 or D5 and D6) which are connected to the winding connection in each case not short circuited during the two-pole short circuit are de-energised.

8. Method according to Claim 6 or 7, **characterised in that** the three-pole short circuit takes place, offset by an angle of rotation approximately in the range from 80°el to 100°el, in particular approximately 90°el, after the two-pole short circuit.

9. Method according to one of Claims 6 to 8, **characterised in that** the angle of rotation ($\varphi_{k2}$) for the two-pole short circuit is defined as a function of the winding inductance (L), the winding resistance (R), the rotational frequency ($\omega$) of the motor [lacuna] a constant offset angle ($\varphi_o$) in accordance with the relation $\varphi_{k2} = \arctan \dfrac{L}{R} \omega + \varphi_o.$

10. Electric motor (1) with a stator (2), having three winding phases (u, v, w), with a permanent-magnet rotor (4) and with commutating electronics (6), comprising a controlled inverter (8) with six electronic switching elements (T1-T6), which are connected in a bridge circuit and provided with control signals (S1-S6) and which serve to control the winding phases (u, v, w) for the purpose of generating a magnetic rotary field to drive the rotor (4), **characterised by** a design of the commutating electronics (6) in such a way that to brake the rotor (4) using the method according to one of the preceding claims the control signals (S1-S6) are supplied to the switching elements (T1-T6) of the inverter (8).

FIG.1

Fig. 2

Fig. 3